# FASCICULE DE BREVET EUROPEEN

(11) **EP 1 405 964 B1**
(45) Date de publication et mention de la délivrance du brevet: **01.06.2005**
(21) Numéro de dépôt: 03103542.1
(22) Date de dépôt: 24.09.2003
(51) Int. Cl.: E04H 4/10

(54) **Couverture enroulable pour bassin**
Aufrollbare Beckenabdeckung
Rollable pool cover

(30) Priorité: 01.10.2002 FR 0212124
(43) Date de publication de la demande: 07.04.2004
(73) Titulaire: Annonay Productions France, 07100 Annonay (FR)
(72) Inventeur: Relmont, Bruno, 10000, Troyes (FR); Brechet, Olivier, 37110, Chateau-Renault (FR)
(74) Mandataire: Palix, Stéphane

(56) Documents cités:
- EP-A- 0 570 311
- US-A- 4 324 370
- US-A- 4 744 471
- US-A- 5 557 811
- US-A- 5 810 281

## Description

### Domaine technique

L'invention se rattache au secteur de l'équipement associé aux piscines, et plus généralement à tous types de bassins. Elle vise plus spécifiquement une couverture enroulable, équipée de barres de renforcement destinées à limiter les risques de déformation de la couverture, notamment en cas de chute d'une personne sur la piscine couverte, et ainsi limiter les risques d'accidents.

L'invention vise plus particulièrement un agencement de ce type de couverture qui en permet le transport aisé, quelles que soient les dimensions du bassin à couvrir.

### Techniques antérieures

De nombreuses solutions ont déjà été proposées pour renforcer les couvertures de piscines, et éviter qu'une personne ayant chuté sur la couverture, en provoque alors soit sa déchirure, soit son enfoncement dans l'eau du bassin. Toutes ces solutions proposent d'équiper la bâche de la piscine avec des barres de support transversales, dont les extrémités reposent sur la margelle de la piscine, et au-dessus de laquelle repose la bâche.

Un tel dispositif est notamment décrit par exemple dans le document FR 2.613.408 ou dans le document US 5 557 811. De façon générale, ce type de couverture de piscine doit être réalisée avec un très grand soin, pour qu'elle conserve ses propriétés de solidité. En effet, la qualité de l'accrochage des barres de support sur la bâche nécessite l'emploi de matériel spécifique et des contrôles particuliers, qui obligent à réaliser la couverture en usine de fabrication, et non pas directement chez l'utilisateur. Ceci génère toutefois certaines contraintes relatives aux opérations de transport de la bâche du lieu de fabrication vers l'endroit où elle doit être installée. En effet, étant donné que la bâche doit être solidarisée aux barres de support, et que ces dernières sont évidemment plus larges que le bassin à recouvrir, il s'ensuit que la couverture enroulée pour son transport présente un encombrement conséquent. Cet encombrement peut engendrer des frais de transport particulièrement élevés, ainsi que des risques de détérioration de la couverture lors de son transport.

Cet inconvénient empêche même l'emploi de ce type de couverture sur des bassins de grandes largeurs, pour lesquelles le transport devient alors quasiment impossible.

Un problème que se propose de résoudre l'invention est celui du coût et des conditions de transport de couvertures de ce type. Un objectif de l'invention est d'éviter à l'utilisateur toute opération d'assemblage de la bâche sur les tubes, pour empêcher des erreurs de montage pouvant générer des risques de détérioration de la bâche.

### Exposé de l'invention

L'invention concerne donc une couverture enroulable pour bassins, et notamment pour piscines, qui comporte de façon connue une bâche flexible, soutenue par plusieurs barres de support parallèles, dont les extrémités sont destinées à reposer sur la périphérie du bassin.

Conformément à l'invention, cette couverture se caractérise en ce que chaque barre de support est formée d'au moins deux tronçons distincts, associés les uns aux autres à partir d'une configuration démontée, occupant un encombrement moindre que celui de la barre de support lorsqu'elle est apte à utilisation. Dans cette couverture, la bâche flexible est solidarisée à chaque tronçon d'extrémité de chaque barre, de manière à permettre le pliage au moins en partie de la bâche flexible sur elle-même lorsque la barre support est dans sa configuration démontée.

Autrement dit, l'invention consiste à équiper la bâche flexible de barres qui peuvent être assemblées directement sur le lieu d'installation de la couverture, de sorte que pendant leur transport, les barres occupent des dimensions réduites, et nettement inférieures à celles du bassin. De cette façon, en fonction de la manière dont les différents tronçons sont agencés dans leur état démonté, il est possible de replier la bâche flexible de manière à former un ensemble d'encombrement nettement plus limité, et donc plus facile à transporter.

L'accrochage de la bâche flexible sur les barres support reste toutefois effectué en usine, avant transport de la couverture vers son lieu d'utilisation, ce qui garantit la qualité de ce montage.

En pratique, les tronçons constituant les barres peuvent être associées de différentes façons. Ainsi, dans une première forme de réalisation, les différents tronçons peuvent être télescopiques, et coulisser les uns à l'intérieur des autres. Le nombre de tronçons télescopiques peut être déterminé en fonction de la largeur de la piscine et de l'encombrement que l'on souhaite obtenir pour le transport. Ainsi, chaque barre peut être constituée de deux, trois, voire quatre tronçons différents.

Avantageusement en pratique, on préfèrera que les différents tronçons présentent des profils indexés, interdisant le pivotement des tronçons les uns à l'intérieur des autres. On conserve de la sorte l'alignement entre les points sur lesquels est accrochée la bâche flexible au niveau des deux tronçons d'extrémité.

En pratique, chaque barre peut comporter des moyens de verrouillage du coulissement des tronçons télescopiques les uns par rapport aux autres. Ces moyens de verrouillage peuvent être réalisés soit par des bagues de serrage, soit par des systèmes rétractables coopérant avec des trous percés dans les différents tubes coulissant. De la sorte, il est possible de régler la longueur de chaque barre à la largeur précise de la bâche.

Dans une autre forme de réalisation, les différents tronçons peuvent être associés en étant raboutés les uns aux autres. Dans ce cas, chaque barre peut comporter alors au moins un élément de blocage apte à coulisser par rapport aux tronçons, jusqu'à la zone de raboutage, pour empêcher le déplacement des tronçons les uns par rapport aux autres.

En pratique, l'élément de blocage peut par exemple être un manchon coulissant à l'extérieur des tronçons, et venant recouvrir la zone de raboutage de deux tubes, maintenant ainsi l'alignement entre les deux tubes et conférant également une résistance accrue au cintrage.

L'aboutage peut être facilité, dans le cas où les extrémités en regard de deux tronçons adjacents présentent des formes différentes et complémentaires.

En pratique, l'élément de blocage peut être réalisé de telle sorte qu'il coulisse à l'intérieur des tronçons creux, pour venir au niveau de la zone de jonction de deux tronçons adjacents.

Dans une troisième forme de réalisation, les tronçons peuvent être articulés les uns par rapport aux autres par des éléments formant charnière.

Bien entendu, l'ensemble des barres de support est formé de tronçons de dimensions analogues, pour faciliter le pliage de la toile en vue de son transport. Cette construction des barres de support en tronçons distincts s'applique donc également aux barres particulières situées sur le bord de la bâche. Dans ce cas, chacun des tronçons de cette barre d'extrémité peut comporter une gorge accueillant un jonc solidaire de la lisière de la bâche en regard. Dans ce cas, les tronçons sont aboutés au moyen d'éléments intermédiaires, pénétrant en partie dans chacun des tronçons, et assurant la continuité de la gorge caractéristique.

### Description sommaire des figures

La manière de réaliser l'invention, ainsi que les avantages qui en découlent, ressortiront bien de la description des différents modes de réalisation qui suivent, à l'appui des figures annexées dans lesquelles :
- la figure 1 est une vue en perspective sommaire d'une bâche conforme à l'invention montrée dépliée.
- la figure 2 est une vue en perspective sommaire montrant une barre de support réalisée à partir de tronçons télescopiques.
- la figure 3 est une vue en perspective sommaire de la bâche de la figure 1 montrée pendant l'opération de pliage préalable à son transport.
- la figure 4 est une vue en coupe transversale de deux tronçons télescopiques.
- la figure 5 est une vue en perspective illustrant un moyen particulier de verrouillage du coulissement de deux tronçons télescopiques.
- la figure 6 est une vue en perspective sommaire illustrant l'extrémité de deux tronçons destinés à être raboutés.
- la figure 7 est une vue en perspective sommaire des tronçons de la figure 6 dans une position raboutée.
- la figure 8 est une vue en perspective sommaire d'une variante de réalisation du raboutage de deux tronçons.
- la figure 9 illustre une vue en perspective sommaire des tronçons de la figure 8 montrés en position raboutée.
- la figure 10 est une vue en perspective sommaire d'une variante de réalisation, dans laquelle les tronçons sont articulés par des éléments formant charnière.
- la figure 11 est une vue en perspective des tronçons de la figure 10 dans une position repliée.
- la figure 12 est une vue en perspective sommaire d'une bâche en cours de pliage, équipée de barres réalisées en tronçons raboutés.
- la figure 13 est une vue en coupe transversale d'une barre de support d'extrémité, et de la lisière de la bâche associée.
- la figure 14 est une vue en perspective sommaire illustrant le montage de deux tronçons formant une barre de support d'extrémité.

### Manière de réaliser l'invention

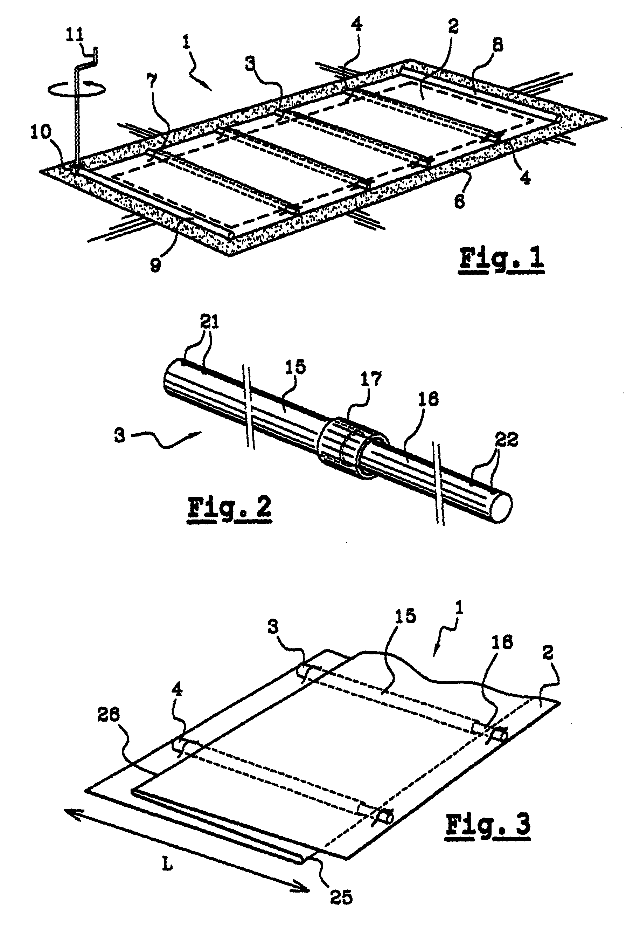

La figure 1 illustre une couverture (1) pour piscine conforme à l'invention, qui comprend de façon principale une bâche flexible (2) associée à un ensemble de barres de support (3) s'étendant transversalement, et dont les extrémités (4) reposent sur la périphérie (6) du bassin. Dans la forme illustrée, ces différentes barres de support (3) traversent la bâche flexible (2) à proximité de leurs extrémités, par des boutonnières (7) réalisées à cet effet dans la bâche. De la sorte, les extrémités (4) des barres reposent sur la face supérieure de la bâche (2), au-dessus de la périphérie (6) du bassin. Toutefois, l'invention n'est pas limitée à cette seule forme de mise en place des barres de support sur la bâche, mais couvre également d'autres variantes (non illustrées) dans lesquelles la bâche flexible est équipée de fourreaux à l'intérieur desquels peuvent être mises en place les barres.

Dans la forme illustrée, la couverture (2) est équipée de deux barres d'extrémité (8,9) disposées au niveau des lisières de la bâche flexible. Une de ces barres d'extrémité (9) est équipée d'un mécanisme (10) d'enroulement de la bâche, au moyen d'une manivelle (11) par exemple. Ce mécanisme étant connu par ailleurs, et sans rapport immédiat avec l'invention, il ne sera pas décrit plus en détail.

Bien entendu, la bâche peut également être équipée de différents tendeurs ou autres moyens non représentés, assurant le placage de la couverture sur le sol, et évitant ainsi toute prise au vent et toute intrusion de feuilles ou autres matériaux sous la couverture.

La figure 2 illustre une forme de montage des tronçons formant une barre de support. Plus précisément, on observe que la barre de support (3) comporte deux tronçons, dont l'un (16) de plus faible diamètre, coulisse à l'intérieur du tronçon (15) de plus fort diamètre. Des moyens de verrouillage (17), sous forme d'une bague de serrage de conception classique, peuvent être mis en place sur l'extrémité du tube de plus gros diamètre (15).

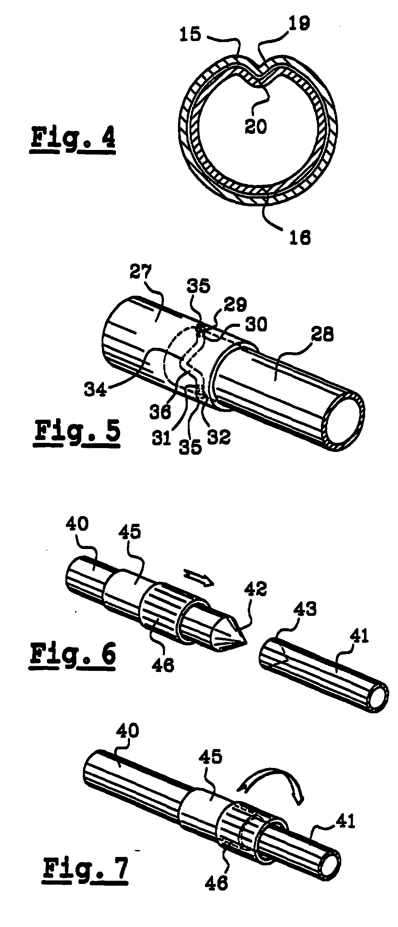

Comme illustré à la figure 4, les deux tubes (15,16) peuvent présenter une singularité de profil, de telle sorte que le coulissement de l'un par rapport à l'autre se fait sans rotation. Cette singularité peut être une légère nervure (19,20) ou tout autre moyen analogue, choisi notamment pour ne pas diminuer la résistance de chaque tronçon au cintrage. Cela permet également de conserver l'alignement des points d'accrochage (21,22) des lisières de la bâche (3) sur les tronçons (15,16), comme illustré à la figure 2. Bien entendu, l'accrochage de la bâche sur les tronçons peut s'effecteur par rivetage, par soudure, ou bien encore par tout autre moyen, et notamment par une pièce intermédiaire montée sur l'extrémité des tronçons, et solidarisée à la bâche.

Ainsi, lorsque les bagues de serrage autorisent le coulissement des différents tronçons télescopiques, les barres de support (3) peuvent être réduites de longueur, comme illustré à la figure 3. Dans ce cas, la bâche flexible (2) peut alors être repliée en formant plusieurs plis, comme illustré à la figure 3. Ce pliage permet de réduire la largeur de la couverture à une largeur L correspondant à la longueur des barres dans leur configuration repliée. On atteint ainsi une largeur sensiblement égale à la moitié de la largeur de la couverture dépliée, lorsqu'on emploie deux tronçons télescopiques. Mais cette largeur L peut encore être diminuée par l'emploi d'un nombre supérieur de tronçons télescopiques. Après la première opération de pliage illustrée à la figure 3, la couverture peut ensuite être enroulée sur elle-même pour occuper un encombrement global particulièrement réduit.

On a illustré à la figure 5 un mode alternatif de réalisation du verrouillage du coulissement des tubes télescopiques. Dans ce cas, les deux tubes (27,28) sont équipés de perçages diamétraux (29-32), disposés en regard dans les cas où les deux tronçons sont indexés en rotation. Ces perçages (29-32) reçoivent un élément élastique (34), comportant deux tétons (35) reliés à une portion centrale assurant un effort, repoussant les deux tétons diamétralement. Les tétons (35) traversent les trous (30,31) percés dans le tronçon de plus faible diamètre (28). Lorsque ces trous (30,31) viennent en regard des trous (29-32) percés dans le tronçon (27) de plus fort diamètre, les tétons (35) s'écartent en pénétrant dans ces trous, assurant ainsi le blocage des deux tronçons (27,28) l'un par rapport à l'autre. La manoeuvre inverse peut être réalisée en escamotant les tétons (35) en exerçant une pression les libérant des trous (29-32) réalisés dans le tronçon (27) de plus grand diamètre. Une pluralité de trous (29) est percée dans le tronçon (27) de plus grand diamètre, permettant de rattraper d'éventuelles différences de tolérance entre la découpe des barres et celle de la bâche.

Compte tenu du fait que les tronçons télescopiques présentent des diamètres différents, on préfèrera alterner l'orientation des barres sur la couverture, de telle sorte que les tronçons de plus fort diamètre se trouvent distribués de part et d'autre de la bâche, et ne sont pas situés d'un côté uniquement.

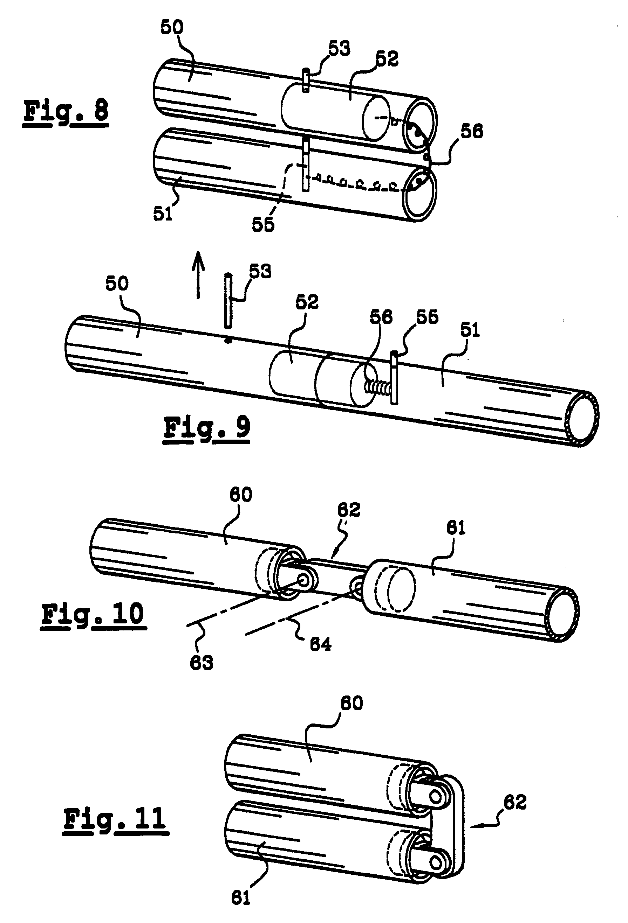

L'assemblage des différents tronçons constituant la barre peut être réalisé également par aboutage de plusieurs tubes (40,41), comme illustré aux figures 6 et 7. Dans ce cas, les extrémités (42,43) des deux tronçons (40,41) de même diamètre sont mis en regard. Un manchon coulissant (45), disposé sur un des tronçons (40), peut alors être amené au niveau de la zone d'aboutage, pour la recouvrir, et empêcher tout déplacement transversal d'un tronçon (40,41) par rapport à l'autre. Des moyens de verrouillage, tel qu'une bague de serrage (46), peuvent assurer le maintien en position du manchon de verrouillage (40), comme illustré à la figure 7. L'aboutage peut être facilité lorsque les extrémités (42,43) des tronçons comportent des profils complémentaires, assurant un auto-centrage des deux tronçons. Bien entendu, des formes différentes de la forme conique illustrée à la figure 6 peuvent être employées, dès lors qu'elle permettent cet auto-centrage. Le nombre de tronçons à rabouter est également déterminé en fonction de la largeur de la piscine et de l'encombrement que l'on souhaite donner à la couverture en position pliée.

Une solution alternative du verrouillage des tubes raboutés, est également illustrée aux figures 8 et 9. Dans ce cas, un des tubes (50) comporte également une pièce coulissante (52), constituée par exemple d'un tube ou d'un cylindre apte à coulisser en son intérieur. Dans la position illustrée à la figure 8, correspondant à une phase de transport, ce cylindre coulissant (52) est maintenu en position à l'intérieur du tronçon (50) par l'intermédiaire d'une goupille (53). Ce cylindre de blocage (52) est relié à une clavette (55) située dans l'autre tronçon (51) par l'intermédiaire de moyens élastiques, constitués par un câble élastique (56) ou un ressort. Ce ressort (56) est sous tension lorsque les deux tronçons (50,51) sont séparés l'un de l'autre, comme illustré à la figure 8.

Lorsque les tronçons (50,51) sont raboutés comme illustré à la figure 9, la goupille (53) est alors extraite, libérant alors le cylindre de blocage (52). Les moyens de rappel (56) attirent alors le cylindre de blocage (52) en direction de la clavette (55), de sorte que le cylindre de blocage (52) vient s'immobiliser au niveau de la zone de jonction des deux tronçons (50,51), assurant ainsi la continuité de la barre. On peut prévoir d'immobiliser le cylindre de blocage lorsque la barre est déployée.

Une autre solution permettant le pliage des barres est illustrée aux figures 10 et 11. Dans ce cas, les extrémités en regard des tronçons (60,61) sont équipés d'un élément (62) intermédiaire formant charnière, comportant deux axes de pivotement (63,64). Cette double charnière (62) permet ainsi le pliage de la barre en tenant compte du diamètre de chaque tronçon (60,61). Lorsque les tronçons (60,61) sont disposés dans la continuité l'un de l'autre, la charnière peut préférentiellement s'autobloquer, empêchant ainsi le repliage inopiné de la barre de support. On peut également prévoir un manchon coulissant venant recouvrir la zone d'articulation.

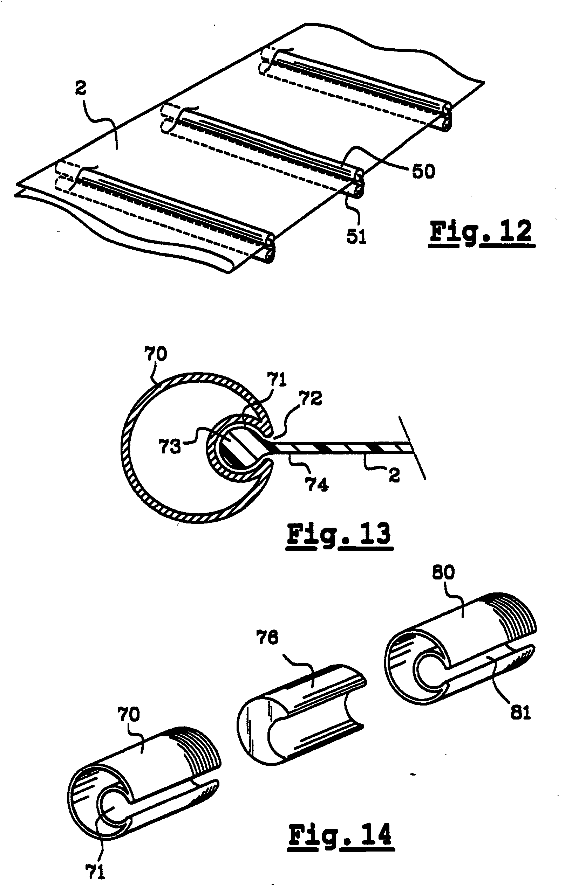

Les barres formées de tronçons raboutés peuvent ainsi être pliées, comme illustré à la figure 12. Dans ce cas, la bâche flexible (2) se retrouve pliée entre les ensembles de tronçons.

Bien entendu, pour des bâches de plus grandes dimensions, il est possible de rabouter plus de deux tronçons selon les principes illustrés aux figures, sans sortir du cadre de l'invention.

Le principe de décomposition de la barre de support en plusieurs tronçons s'applique également aux barres d'extrémité, notamment dans le cas illustré à la figure 13 où cette barre coopère avec la lisière de la bâche flexible.

Ainsi, comme illustré à la figure 13, la barre d'extrémité (70) comporte une gorge longitudinale (71), s'étendant sur toute sa longueur, et présentant une ouverture (72) de plus faibles dimensions. Cette gorge (71) reçoit un jonc (73) solidarisé à une lisière (74) de la bâche flexible (2). Bien entendu, l'invention n'est pas limitée à cette seule forme de gorge et de jonc, mais couvre toutes les variantes permettant le blocage de la lisière de la bâche sur une barre.

Conformément à l'invention, cette barre d'extrémité est également constituée de plusieurs tronçons distincts (70,80), comportant donc chacun une portion (71,81) de la gorge caractéristique. Ces différents tronçons (70,80) sont reliés par des éléments intermédiaires (76), dont le profil permet d'encaisser le renfoncement formé par la gorge (71,81) de chaque tronçon. Bien entendu, la mise en place de ces éléments intermédiaires peut s'effectuer de différentes manières, et peut notamment être bloquée en position par des mécanismes de vissage, d'encliquetage ou équivalents. Les tronçons (70,80) de la barre d'extrémité peuvent également adopter d'autres profils, notamment dans le cas où la barre d'extrémité doit recevoir un mécanisme d'enroulage, motorisé ou manuel.

Bien entendu, l'invention décrite ci-avant dans son application à des couvertures de piscines, peut se décliner à des applications de recouvrement de tous types de bassins, dans lesquelles la couverture doit présenter une certaine rigidité.

Il ressort de ce qui précède que la couverture de piscine décrites ci-avant, présente de multiples avantages, et notamment celui de pouvoir être repliée pour occuper un encombrement réduit, particulièrement utile pour les opérations de transport. Le transport s'effectue donc de manière plus aisée, et en limitant les risques de détérioration de la couverture. En outre, le montage des différentes barres de support est particulièrement aisé, et ne nécessite aucune intervention sur les zones de solidarisation de la bâche sur les barres.

## Revendications

1. Couverture enroulable (1) pour bassin, et notamment pour piscine comportant une bâche flexible (2), soutenue par plusieurs barres de supports parallèle (3), dont les extrémités (4) sont destinées à reposer sur la périphérie (6) du bassin, et dans laquelle chaque barre (3) de support est formée d'au moins deux tronçons distincts (15,16), associés les uns aux autres à partir d'une configuration démontée, occupant un encombrement moindre que celui de la barre de support (3) apte à l'utilisation, **caractérisée en ce que** la bâche flexible (2) est solidarisée à chaque tronçon d'extrémité (15,16) de chaque barre (3), de manière à permettre le pliage au moins en partie de la bâche flexible (2) sur elle-même lorsque la barre support (3) est dans la configuration démontée.

2. Couverture selon la revendication 1, **caractérisée en ce que** les différents tronçons (15,16) sont télescopiques.

3. Couverture selon la revendication 2, **caractérisée en ce que** les différents tronçons (15,16) présentent des profils (19,20) indexés interdisant le pivotement des tronçons les uns à l'intérieur des autres.

4. Couverture selon la revendication 2, **caractérisée en ce que** chaque barre comporte des moyens de verrouillage (17) du coulissement des tronçons télescopiques (15,16) les uns par rapport aux autres.

5. Couverture selon la revendication 1, **caractérisée en ce que** les tronçons (40,41) sont raboutés les uns aux autres.

6. Couverture selon la revendication 5, **caractérisée en ce que** chaque barre comporte au moins un élément de blocage (45) apte à coulisser par rapport aux tronçons (40,41) jusqu'à la zone de raboutage.

7. Couverture selon la revendication 6, **caractérisée en ce que** félément de blocage est un manchon (45) coulissant à l'extérieur des tronçons.

8. Couverture selon la revendication 5, **caractérisée en ce que** les extrémités (42,43) en regard de deux tronçons adjacents (40,41) présentent des formes différentes et complémentaires, de manière à favoriser l'aboutage.

9. Couverture selon la revendication 6, **caractérisée en ce que** l'élément de blocage (52) est apte à coulisser à l'intérieur des tronçons creux (50,51).

10. Couverture selon la revendication 1, **caractérisée en ce que** les tronçons (60,61) sont articulés les uns par rapport aux autres par des éléments formant charnière (62).

11. Couverture selon la revendication 1, **caractérisée en ce que** la ou les barres de support situées sur un bord de la bâche sont formées de plusieurs tronçons (70,80) comportant chacun une gorge (71,81) accueillant un jonc (73) solidaire de la lisière (74) de la bâche flexible (2) en regard, lesdits tronçons (70,80) étant aboutés au moyen d'éléments intermédiaires (76) pénétrant en partie dans chacun des tronçons (70,80).

## Patentansprüche

1. Aufrollbare Abdeckung (1) für Becken und insbesondere für Schwimmbekken, welche eine flexible Plane (2) umfaßt, die durch mehrere parallele Stützstangen (3) gehalten wird, deren Enden (4) dazu bestimmt sind, auf dem Rand (6) des Beckens zu ruhen, und bei der jede Stützstange (3) aus mindestens zwei verschiedenen Teilstücken (15, 16) gebildet ist, welche miteinander ausgehend von einer zerlegten Anordnung verbunden sind, die einen Raumbedarf aufweist, der geringer als der der verwendungsfähigen Stützstange (3) ist, **dadurch gekennzeichnet, daß** die flexible Plane (2) mit jedem End-Teilstück (15, 16) jeder Stange (3) fest verbunden ist, so daß das mindestens teilweise Zusammenfalten der flexiblen Plane (2) ermöglicht wird, wenn die Stützstange (3) sich in der zerlegten Anordnung befindet.

2. Abdeckung nach Anspruch 1, **dadurch gekennzeichnet, daß** die verschiedenen Teilstücke (15, 16) teleskopisch sind.

3. Abdeckung nach Anspruch 2, **dadurch gekennzeichnet, daß** die verschiedenen Teilstücke (15, 16) mit Rastmitteln versehene Profile (19, 20) aufweisen, welche die Drehung der Teilstücke ineinander unterbinden.

4. Abdeckung nach Anspruch 2, **dadurch gekennzeichnet, daß** jede Stange Mittel zum Blockieren (17) der Verschiebung der teleskopischen Teilstücke (15, 16) in bezug zueinander umfaßt.

5. Abdeckung nach Anspruch 1, **dadurch gekennzeichnet, daß** die Teilstücke (40, 41) aneinandergefügt sind.

6. Abdeckung nach Anspruch 5, **dadurch gekennzeichnet, daß** jede Stange mindestens ein Blockierelement (45) umfaßt, welches geeignet ist, in bezug auf die Teilstücke (40, 41) bis zur Zone des Aneinanderfügens verschoben zu werden.

7. Abdeckung nach Anspruch 6, **dadurch gekennzeichnet, daß** das Blockierelement eine Muffe (45) ist, welche am Äußeren der Teilstücke verschiebbar ist.

8. Abdeckung nach Anspruch 5, **dadurch gekennzeichnet, daß** die einander gegenüberliegenden Enden (42, 43) zweier benachbarter Teilstücke (40, 41) unterschiedliche und komplementäre Formen aufweisen, um das Aneinanderfügen zu unterstützen.

9. Abdeckung nach Anspruch 6, **dadurch gekennzeichnet, daß** das Blockierelement (52) geeignet ist, innerhalb der hohlen Teilstücke (50, 51) verschoben zu werden.

10. Abdeckung nach Anspruch 1, **dadurch gekennzeichnet, daß** die Teilstükke (60, 61) durch ein Scharnier (62) bildende Elemente aneinander angelenkt sind.

11. Abdeckung nach Anspruch 1, **dadurch gekennzeichnet, daß** die an einer Kante der Plane befindliche(n) Stützstange(n) aus mehreren Teilstücken (70, 80) gebildet sind, welche jeweils eine Nut (71, 81) umfassen, die eine mit der gegenüberliegenden Kante (74) der flexiblen Plane (2) fest verbundene Wulst (73) aufnehmen, wobei die genannten Teilstücke (70, 80) mittels Zwischenelementen (76) aneinandergefügt sind, welche teilweise in jedes der Teilstükke (70, 80) eindringen.

## Claims

1. Roller cover (1) for a pool, especially a swimming pool, comprising a flexible sheet (2) supported by several parallel supporting poles (3) whose ends (4) are designed to rest on the pool perimeter (6), and in which each supporting pole (3) is made up of at least two different sections (15, 16) joined together from a retracted configuration and occupying less space than the supporting pole (3) ready for use, which cover is **characterized in that** the flexible sheet (2) is attached to each end section (15, 16) of each pole (3), so as to allow at least partial folding of the flexible sheet (2) upon itself when the supporting pole (3) is in the retracted configuration.

2. Cover according to Claim 1, **characterized in that** the different sections (15, 16) are telescopic.

3. Cover according to Claim 2, **characterized in that** the different sections (15, 16) have indexed profiles (19, 20) to prevent the sections rotating inside each other.

4. Cover according to Claim 2, **characterized in that** each pole has clamping means (17) for preventing the telescopic sections (15, 16) from sliding relative to each other.

5. Cover according to Claim 1, **characterized in that** the sections (40, 41) are joined end to end.

6. Cover according to Claim 5, **characterized in that** each pole comprises at least one locking part (45) able to slide along the sections (40, 41) to the end-to-end join.

7. Cover according to Claim 6, **characterized in that** the locking part is a sleeve (45) which slides along the outside of the sections.

8. Cover according to Claim 5, **characterized in that** the opposing ends (42, 43) of two adjacent sections (40, 41) are given different and complementary shapes to assist end-to-end joining.

9. Cover according to Claim 6, **characterized in that** the locking part (52) is able to slide along the inside of the hollow sections (50, 51).

10. Cover according to Claim 1, **characterized in that** the sections (60, 61) are hinged to each other by hinge joints (62).

11. Cover according to Claim 1, **characterized in that** the supporting pole or poles situated one edge of the sheet are made up of several sections (70, 80) each comprising a groove (71, 81) which houses a bead (73) attached to the edge (74) of the adjacent flexible sheet (2), the said sections (70, 80) being joined end to end by means of intermediate parts (76) partly fitting into each of the sections (70, 80).
